# EUROPEAN PATENT SPECIFICATION

(11) **EP 1 434 407 B1**
(45) Date of publication and mention of the grant of the patent: **16.08.2006**
(21) Application number: 03028499.6
(22) Date of filing: 12.12.2003
(51) Int. Cl.: H04L 29/06, H04L 12/22

(54) **Radio communication system, shared key management server and terminal**
Radio Kommunikationensystem, verteilten Schlüssel Verwaltungsserver und Terminal
Système de communication radio, serveur de gestion de clé partagée et terminal

(30) Priority: 27.12.2002 JP 2002379395
(43) Date of publication of application: 30.06.2004
(73) Proprietor: NEC CORPORATION, Tokyo (JP)
(72) Inventor: Shinohara, Masahito, Tokyo (JP)
(74) Representative: von Samson-Himmelstjerna, Friedrich

(56) References cited:
- EP-A- 1 146 692
- PATENT ABSTRACTS OF JAPAN vol. 2000, no. 21, 3 August 2001 (2001-08-03) & JP 2001 111543 A (NEC CORP), 20 April 2001 (2001-04-20)

## Description

### BACKGROUND OF THE INVENTION

### 1. Field of the Invention

The present invention relates to a security technique for a wireless LAN system.

### 2. Related Art

On a wireless LAN, data is encrypted in order that the content of the data is not to be understood even if the signals exchanged through a radio channel are intercepted by a third party. In a wireless LAN system conforming to IEEE802.11b/IEEE802.11a, a cryptographic technique called WEP(Wired Equivalent Privacy) is applied to a radio section between an access point device and a terminal station device.

In a wireless LAN system using the WEP cryptographic technique, data transmitted between an access point and a terminal is encrypted. The WEP cryptographic technique adopts a shared key method, in which a shared key, set in both the access point and the terminal and not transmitted on the radio channel, is used for encrypting data (see, for example, the Japanese Patent Application Laid-open No. 2001-111543).

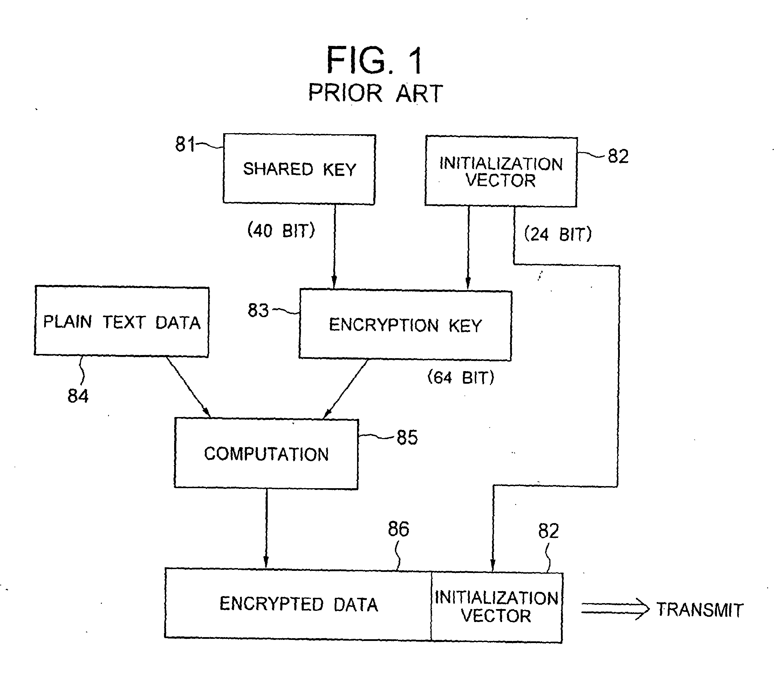

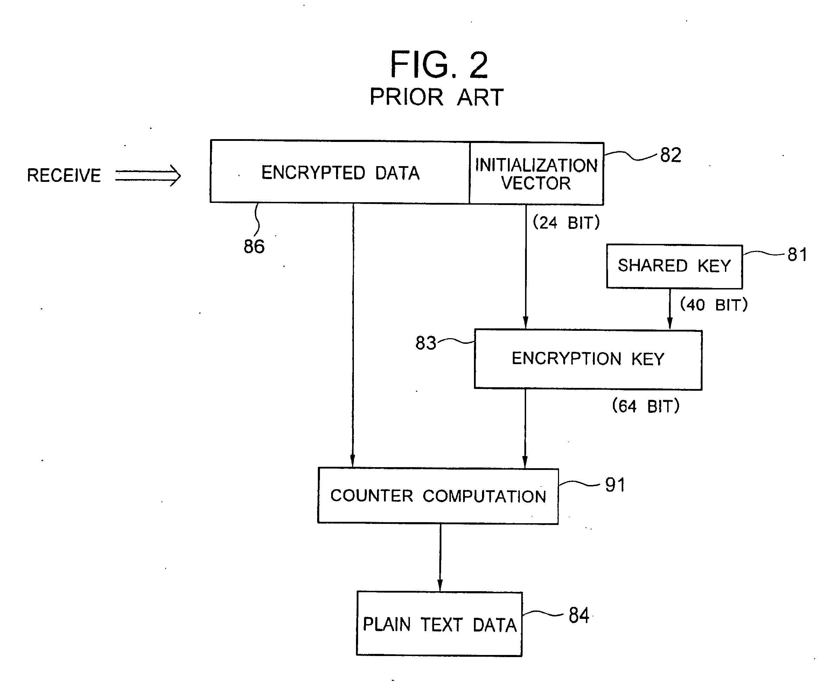

Figs. 1 and 2 are conceptual illustrations for explaining processing outlines of a WEP encryption and its decryption. Fig. 1 shows a transmitting device and Fig. 2 shows a receiving device.

A shared key 81 shown in Figs. 1 and 2 is key information which is preset in both the transmitting device and the receiving device and is commonly held. The length of the key information may be 40 bit or 104 bit. Although the 40-bit shared key 81 is described below as an example, a case of 104-bit shared key is basically the same.

Referring to Fig. 1, the transmitting device uses a 64-bit encryption key 83, which is created by mixing the 40-bit shared key 81 and a 24-bit initialization vector 82. The initialization vector 82 is a value which is the basis of a random number sequence used for the encryption, and is transmitted to the receiving device together with an encrypted data 86. It is preferable that the initialization vector 82 be frequently changed. For example, it may be changed per message.

The transmitting device performs a prescribed computation 85 to plain text data 84, which is data before encrypted, with a use of the encryption key 83 to thereby generate the encrypted data 86, that is, data which has already been encrypted. The computation 85 is a process which generates a pseudo-random number sequence using the encryption key 83, and performs XOR with the pseudo-random number sequence and the plain text data 84 to thereby generates the encrypted data 86.

The transmitting device then transmits the encrypted data 86 and the initialization vector 82 to the receiving device.

Referring to Fig. 2, the receiving device mixes the initialization vector 82 received from the transmitting device and the shared key 81 which has been kept by itself to thereby obtain the encryption key 83. Then, the receiving device performs a prescribed counter computation 91 with a use of the encrypted data 86 received from the transmitting device and the encryption key 83 to thereby reconstitute the plain text data 84. Same as the computation 83, the counter computation 91 is a process which generates a pseudo-random number sequence using the encryption key 83, and performs XOR with the pseudo-random number sequence and the encrypted data 86 to thereby reconstitute the plain text data 84.

In a wireless LAN system, data on a radio channel is encrypted with the WEP cryptographic technique and even if signals are intercepted by a third party, the signals cannot be easily understood.

In the WEP cryptographic technique, although the initialization vector 82 is frequently changed, the initialization vector 82 is so short with 24 bit that it is repeated in a short cycle. As such, if a third party continuously monitors data on the radio channel and collects data having the same initialization vector 82, the shared key 81 may be easily deciphered. It is said that the shared key 81 may be deciphered by monitoring the data for 24 hours or so. When the shared key 81 is deciphered and the encryption is broken, the data may be eavesdropped or tampered. Further, since the shared key 81 must be input by each user, which may be troublesome, there is a case that an encryption is not used.

EP-A-1 146 692 discloses a mobile communication system having a mobile terminal operable to communicate pursuant to a first radio communication system and to communicate pursuant to a second radio communication system, an improvement of apparatus for facilitating authentication of the second radio communication system to communicate pursuant to the second radio communication system, said apparatus comprising: a storage element coupled to the second radio communication system, said storage element for storing indications of a secured-identifier identifying the mobile terminal in the second radio communication system, the indications of the secured identifier accessible by the second radio communication system to be used in authentication procedures by the mobile terminal to authenticate the second radio communication system.

### SUMMARY OF THE INVENTION

It is therefore an object of the present invention to provide a radio communication system to which a cryptographic technique, having less possibility of data being eavesdropped or tampered and easily used by users, is applied.

In order to achieve the aforementioned object, a radio communication system according to the present invention comprises: a first communication network through which data communications are performed; a second communication network formed independent of the first communication network; a terminal connecting with the first communication network and the second communication network; a shared key management server connecting with the first communication network and the second communication network; and an authentication unit provided to the first communication network. The shared key management server comprising means for receiving an issue request, which receives, from the terminal through the second communication network, an issue request of the shared key for use in the first communication network; means for generating a shared key, which generates a shared key for the terminal according to the issue request of the shared key from the terminal, the issue request being received at the means for receiving the issue request; and means for informing a shared key, which informs the terminal via the second communication network and the authentication unit via the first communication network of the shared key generated at the means for generating the shared key; and in that the authentication unit has a function of authenticating true/false of the terminal by using an authentication request, output from the terminal based on the shared key, as a trigger, and informing the terminal of the authentication result. The terminal outputs to the authentication unit an authentication request based on the shared key by using the information from the shared key management server as a trigger, and performs data communications through the first communication network based on the shared key by using the authentication result from the authentication unit as a trigger.

In the present invention, when data communications are performed from the terminal using the first communication network, an issue request of a shared key is output from the terminal to the shared key management server through the second communication network. The shared key management server generates the shared key by using the issue request of the shared key, output from the terminal through the second communication network, as a trigger. The generated shared key is informed from the shared key management server to the authentication unit and to the terminal.

The terminal outputs to the authentication unit an authentication request based on the shared key by using the information from the shared key management server as a trigger. In turn, the authentication unit authenticates true/false of the terminal by using the authentication request, output from the terminal based on the shared key, as a trigger, and informs the terminal of the authentication result. The terminal, using the authentication result from the authentication unit as a trigger, performs data communications based on the shared key through the first communication network.

According to the present invention, the terminal requests the shared key management server to issue a shared key through the second communication network, and the shared key management server generates the shared key and informs both the terminal and the authentication unit of the shared key. Therefore, the authentication unit and the first communication network can automatically obtain a shared key only known to each other and use it for protecting the security of the radio channel.

The radio communication system of the present invention may be so configured that the first communication network is formed of a wireless LAN connecting with the terminal over the radio channel, the authentication unit includes at least one access point device and connects with the wireless LAN over a wire LAN, and the second communication network is a mobile telephone network which covers at least one location registering area.

Accordingly, in the present invention, communication networks which have already been provided to the first communication network and the second communication network can be used respectively, so that a cost increase may be suppressed.

In the radio communication system of the present invention, the shared key management server may inform each access point device, existing in an area to which a terminal location is registered on the second communication network, of a shared key.

Since a shared key is given to each access point device located around the terminal, the terminal to be connected with the first communication network via the access point device is subject to an authentication test of true/false when connecting with the first communication network, and the only terminal, the authentication result of which is true, connects with the first communication network. Therefore, it is possible to prevent a case that a third party, instead of a user of the terminal, acts as the user and performs data communications.

In the radio communication system of the present invention, the shared key management server may inform each access point device of a different shared key, and inform the terminal of every shared key.

As such, the radio communications are performed using different shared keys by setting a terminal to be connected and each access point device as a unit, which makes it difficult to decipher the shared key so that a high security can be maintained.

In the radio communication system of the present invention, the terminal may request the shared key management server to issue a shared key at intervals of a prescribed time.

As such, the shared key is updated to a new one before the shared key is deciphered through a continuous monitoring of data, which makes it difficult to decipher the shared key. Further, this makes it impossible to perform an unauthorized access using a deciphered shared key, so that the security of the communication can be reliably maintained.

In the radio communication system according to the present invention, the terminal may request the shared key management server to issue a shared key every time the terminal registers its location to the second communication network.

As such, the shared key held by the terminal and each access point device is updated at the time of location registration, which makes it difficult to decipher the shared key through a continuous monitoring of data.

In the radio communication system of the present invention, the shared key management server may generate a shared key for a shared terminal at intervals of a prescribed time, and inform the terminal and the authentication unit of the shared key.

As such, a shared key held by the terminal and the authentication unit is updated periodically, which makes it difficult to decipher the shared key through a continuous monitoring of data.

In the radio communication system of the present invention, the shared key may be used for encrypting data to be transmitted/received by the authentication unit and the terminal.

In the radio communication system of the present invention, the shared key may also be used by the authentication unit to authenticate the terminal.

The shared key management server of the present invention is a shared key management server for use in a radio communication system including a first communication network for data communications performed by a terminal and a second communication network which is formed independent of the first communication network and is provided for generating a shared key for use in the data communications. The shared key management server comprises: a means for receiving an issue request, which receives, from the terminal through the second communication network, an issue request of the shared key for use in the first communication network; a means for generating a shared key, which generates a shared key for the terminal according to the issue request of the shared key from the terminal, the issue request being received at the means for receiving the issue request; and a means for informing a shared key, which informs the terminal via the second communication network and the authentication unit first communication network of the shared key generated at the means for generating the shared key.

The shared key management server of the present invention may be so configured that the first communication network is formed of a wireless LAN which connects with the terminal over a radio channel and is provided with an authentication unit; the authentication unit has a function of authenticating true/false of the terminal by using an authentication request output from the terminal based on the shared key as a trigger, and informing the terminal of the authentication result; the authentication unit includes at least one access point device and connects with the wireless LAN over a wire LAN; and the second communication network is a mobile telephone network which covers at least one location registering area.

In the shared key management server of the present invention, the means for informing a shared key may inform each access point device, existing in an area to which a terminal location is registered on the second communication network, of a shared key.

In the shared key management server of the present invention, the means for generating a shared key may generate a different shared key for each access point device and the means for informing a shared key may inform each corresponding access point device of the shared key generated for each access point device, and inform the terminal of every shared key.

In the shared key management server of the present invention, the means for generating a shared key may also generate a shared key for the terminal at intervals of a prescribed time without any request from the terminal.

The terminal according to the present invention is a terminal for use in a radio communication system including a first communication network for data communications performed by the terminal and a second communication network which is formed independent of the first communication network and is provided for generating a shared key for use in the data communications. The terminal, which connects with the first communication network and the second communication network over a radio channel, comprises: a first communication controlling means for controlling radio communications performed through the first communication network; a second communication controlling means for controlling communications performed through the second communication network; and a main controlling means for requesting, via the second communication controlling means, a shared key management server managing a shared key to issue a shared key, receiving the shared key issued by the server, and informing the first communication controlling means of the shared key for use between the first communication controlling means and the first communication network.

The terminal of the present invention may be so configured that the first communication network is formed of a wireless LAN which connects with the terminal over a radio channel and is provided with an authentication unit; the authentication unit has a function of authenticating true/false of the terminal by using an authentication request output from the terminal based on the shared key as a trigger, and informing the terminal of the authentication result; the authentication unit includes at least one access point device and connects with the wireless LAN over a wire LAN; and the second communication network is a mobile telephone network which covers at least one location registering area.

In the terminal of the present invention, the main controlling means may request the server to issue a shared key at intervals of a prescribed time.

In the terminal of the present invention, the main controlling means may also request the server to issue a shared key every time it performs a location registration to the second communication network.

In the terminal of the present invention, the first communication controlling means may use the shared key for encrypting data to be transmitted/received between the first communication network.

In the terminal of the present invention, the first communication controlling means may also use the shared key for an authentication by the first communication network.

### BRIEF DESCRIPTION OF THE DRAWINGS

Fig. 1 is a conceptual illustration for explaining a processing outline of a WEP encryption;
Fig. 2 is a conceptual illustration for explaining a processing outline of a decryption of the WEP encryption;
Fig. 3 is a system diagram showing the configuration of a radio communication system of an embodiment according to the present invention;
Fig. 4 is a block diagram showing the configuration of a terminal shown in Fig. 3;
Fig. 5 is a block diagram showing the configuration of a shred key management server for generating a shared key;
Fig. 6 is a sequence diagram showing the operation of the radio communication system according to the present embodiment;
Fig. 7 is a flowchart showing the detail of a shared key generating process;
Fig. 8 is a sequence diagram showing a shared key informing process;
Fig. 9 is a sequence diagram showing a process of requesting a shared key update; and
Fig. 10 is a sequence diagram showing the operation of the radio communication system at the time of starting wireless LAN communications when a shared key is used for a user authentication of the wireless LAN.

### PREFERRED EMBODIMENT OF THE INVENTION

An embodiment of the present invention will now be described in detail with reference to the drawings.

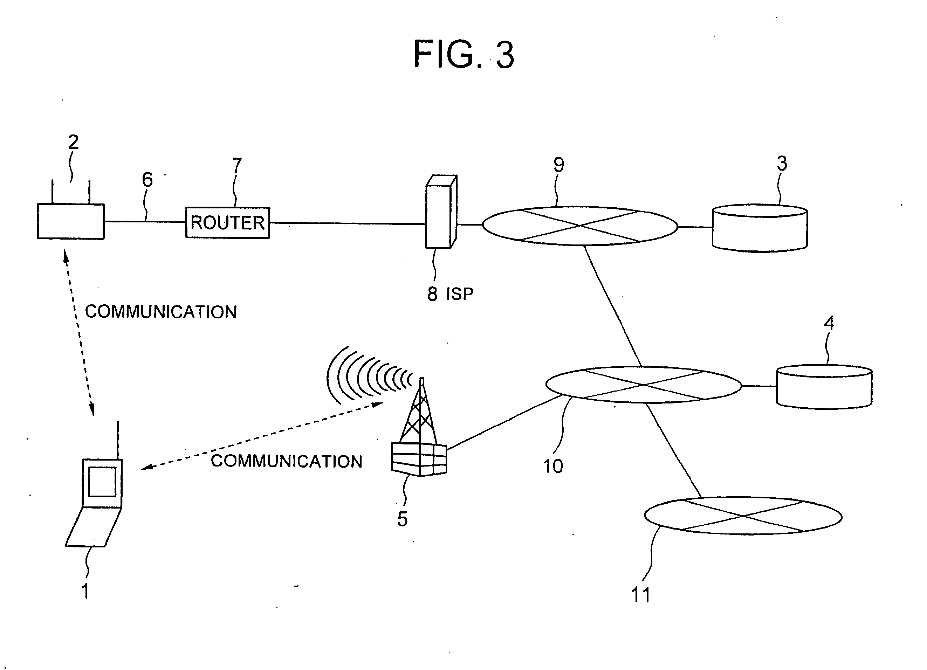

Fig. 3 is a system diagram showing the configuration of a radio communication system according to the present invention. As shown in Fig. 3, the radio communication system according to the present invention is so configured that a mobile telephone system and a wireless LAN system are combined. The radio communication system of the present embodiment includes a terminal 1, an access point device 2, shared key management servers 3, 4, and a radio base station 5.

The terminal 1 is a terminal which is commonly used by the mobile telephone system and the wireless LAN system. That is, the terminal 1 is a mobile telephone into which a function as a terminal station device in the wireless LAN system is installed. The terminal 1 connects with the access point device 2 over a radio channel (antenna) so as to perform communications on the wireless LAN. The terminal 1 also connects with a mobile telephone network 10 via the radio base station 5 so as to make calls with other mobile telephone terminals (not shown) or fixed telephones (not shown) connecting with a fixed telephone network 11.

The access point device 2 connects with a wire LAN 6 and also connects with the terminal 1 over the radio channel. With the access point device 2 relaying communications, the terminal 1 is capable of connecting with the wire LAN 6. The wire LAN 6 connects with a device of an Internet service provider (hereinafter referred to as an ISP device) 8 via a router 7. The wire LAN 6 is capable of connecting with the Internet 9 by the ISP device 8.

The shared key management server 3, connecting with the Internet 9, is a server for managing a shared key which is used for encrypting data on the radio channel in the wireless LAN system. The shared key management server 3 manages a shared key received from the shared key management server 4 and informs the access point device 2 through the Internet 9.

The shared key management server 4 connects with the mobile telephone network 10. The mobile telephone network 10, the Internet 9 and the fixed telephone network 11 connect with each other. The shared key management server 4 generates a shared key to be used in the wireless LAN system, manages it and informs the terminal 1 and the shared key management server 3 of it. A shared key is generated upon request from the terminal 1. The shared key management server 4 may periodically generate a shared key so as to update it without any request from the terminal 1.

The radio base station 5, connecting with the mobile telephone network 10, connects with the terminal 1 as a mobile telephone terminal over the radio channel. Accordingly, the terminal 1 is capable of making calls with other mobile telephone terminals (not shown) or fixed telephones (not shown) connecting with the fixed telephone network 11.

With the configuration described above, when a call is made from the terminal 1 of the mobile telephone network 5 to a fixed telephone (not shown) connecting with the fixed telephone network 11, a connection is first established between the terminal 1 and the radio base station 5. Then, the mobile telephone network 10 and the terminal 1 perform a cross authentication, a location registration and securing of a band by transmitting/receiving control information. Then, exchanging processing is performed within the mobile telephone network 10, and the channel is linked to the address of the fixed telephone network so that a call can be realized.

The location registration may be performed at the time besides originating a call. When the terminal 1 is moved from a predetermined location registering area to another location registering area, the location is registered to the moved area.

In a case that the terminal 1 is to connect with the Internet 9 using the wireless LAN system, it is realized by defining a channel performing the radio communications between the terminal 1 and the access point device 2 and'performing cross authentication, so that the terminal 1 connects with the Internet 9 via the router 7 and the ISP device 8.

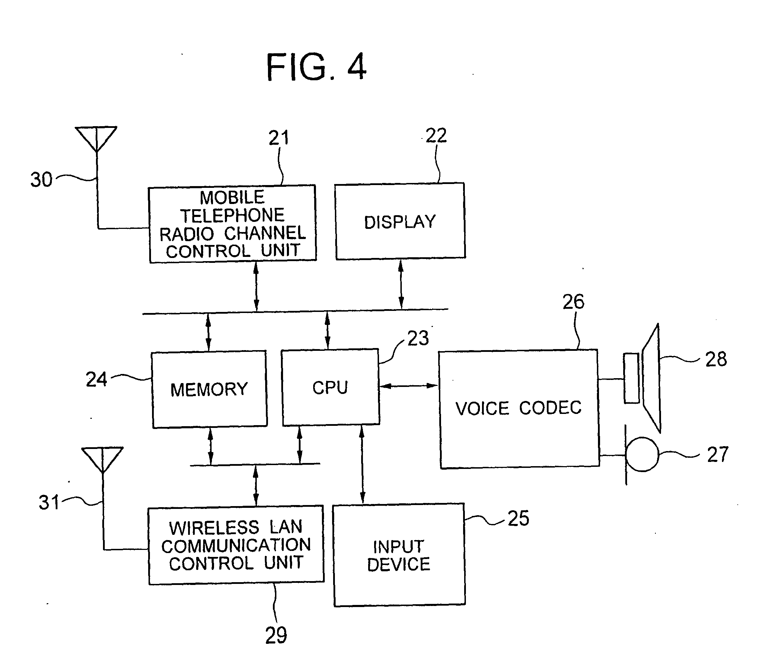

Fig. 4 is a block diagram showing the configuration of the terminal shown in Fig. 3. Referring to Fig. 4, the terminal 1 includes, a radio communication control unit 21 for a mobile telephone, a display 22, a processor (CPU) 23, a memory 24, an input device 25, a voice codec 26, a microphone 27, a speaker 28, a wireless LAN communication control unit 29, and antennas 30, 31.

The antenna 30 is used for the mobile telephone system, and the antenna 31 is used for the wireless LAN system.

The CPU 23 executes processing of a program stored in the memory 24, and controls the radio communication control unit 21 for a mobile telephone, the display 22, the input device 25, the voice codec 26, and the wireless LAN communication control unit 29 so as to operate them in coordination. The CPU 23 also performs location registrations, voice calls and the like by transmitting/receiving the control information between the radio base station 5 and between mobile exchange stations (not shown) in the mobile telephone network 10. The CPU 23, when performing a location registration, obtains a shared key together with the registration by requesting it to the shared key management server 4. Further, the CPU 23 uses the shared key to thereby perform data communications by connecting with the Internet 9 via the access point device 2, the ISP device 8 or the like in the wireless LAN system.

The input device 25 is a manipulation unit for use in inputting information manipulated by users.

The display 22 displays various types of information such as information input from the input device 25 by a user, information showing the state of the terminal 1, information showing data contents received through data communications, or the like, according to the control of the CPU 23.

The radio communication control unit 21 for a mobile telephone modulates/demodulates signals transmitted/received through the antenna 30 and converts them into baseband signals. For example, demodulated signals of call voices are transmitted to the voice codec 26 by the CPU. Signals of the control information are taken into the CPU 23.

The voice codec 26 receives analog signals of the call voices form the microphone 27, encodes them, and transmits them to the CPU 23. The voice codec 26 also transmits analog signals, generated by decoding the coded call voices received from the CPU 23, to the speaker 28.

The wireless LAN communication control unit 29 modulates/demodulates signals transmitted/received through the antenna 31. Signals on the radio channel between the access point device 2 and the terminal 1 have been encrypted with the shared key so that the data is in the state of not being subject to eavesdropping or tampering. This encryption and the decryption are also done at the wireless LAN communication control unit 29.

The demodulated signals of the data communications are temporarily recorded in the memory 24. Then, the signals of the data communications recorded in the memory 24 are displayed on the display 22 by, for example, the control of the CPU 23.

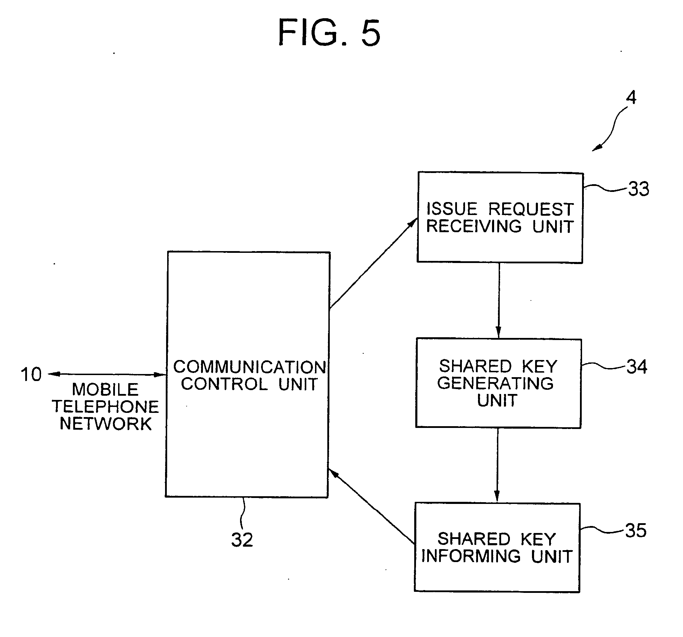

Fig. 5 is a block diagram showing the configuration of the shared key management server which generates a shared key. Referring to Fig. 5, the shared key management server 4 for generating a shared key includes, a communication control unit 32, an issue request receiving unit 33, a shared key generating unit 34, and a shared key informing unit 35.

The communication control unit 32, connecting with the mobile telephone network 10, controls communications with the terminal 1, the shared key management server 3 and the like. Upon receipt of a request for generating a shared key from the terminal 1, the communication control unit 32 informs the issue request receiving unit 33 of the request. The request includes information indicating the terminal 1 requesting to generate the shared key, information about an area to which the location of the terminal 1 is registered.

The communication control unit 32 also controls communications to inform the terminal 1 or the shared key management server 3 of the shared key from the shared key informing unit 35.

The issue request receiving unit 33 receives the request for generating the shared key from the terminal 1 and informs the shared key generating unit 34.

Upon receipt of a request from the issue request receiving unit 33, the shared key generating unit 34 generates a shared key corresponding to the terminal 1 requesting the shared key, and transmits it to the shared key informing unit 35. The shared key generating unit 34 also regenerates the shared key for each of the terminals 1 at intervals of a certain time, and transmits it to the shared key informing unit 35.

Upon receipt of the shared key from the shared key generating unit 34, the shared key informing unit 35 informs the corresponding terminal 1 of the shared key. The shared key informing unit 35 also transmits shared keys for all access point devices 2 existing within the area to which the location of the terminal 1 is registered to the shared key management server 3. It should be noted here that the shared keys are different for respective access point devices 2.

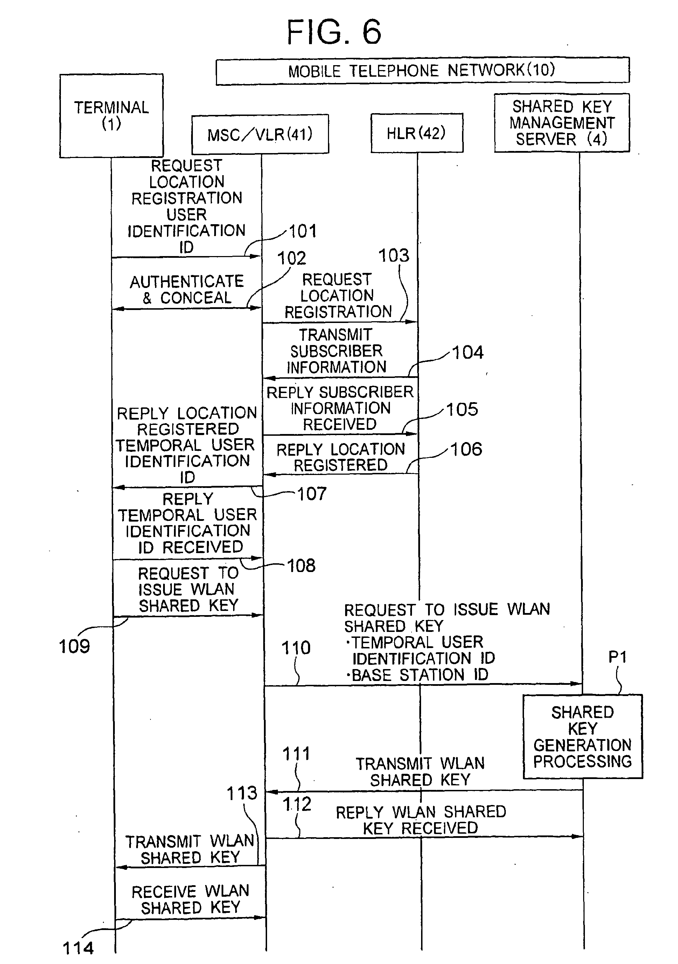

Fig. 6 is a sequence diagram showing the operation of the radio communication system according to the present embodiment. As shown in Fig. 6, the mobile telephone network 10 includes a mobile exchange station (MSC/VLR) 41 and a home location register (hereinafter referred to as an HLR) 42. This mobile exchange station 41 includes a visitor location register (hereinafter referred to as a VLR). The HLR 42 accumulates in a database subscriber information of a user of each terminal 1. The VLR records terminals 1, the locations of which are registered in the communication area of each radio base station 5. The shared key management server 4 may be considered as connecting with the mobile telephone network or as being included in the mobile telephone network.

Referring to Fig. 6, the terminal 1 as a mobile telephone terminal receives beacon signals transmitted from a plurality of radio base stations 5 and, addressing a radio base station 5 with the best radio wave condition, transmits a message of requesting a location registration to the mobile exchange station 41 (step 101). The message of requesting a location registration includes a user identification ID for identifying the user of the terminal 1.

Next, authentication processing and concealment processing are performed between the mobile exchange station 41 and the terminal 1 (step 102). With the authentication processing, it is determined whether or not the terminal 1 is capable of connecting with the mobile telephone network. Further, with the concealment processing, concealment of the signals on the radio channel starts.

Next, the mobile exchange station 41 transmits the message of requesting a location registration to the HLR 42 (step 103). The HLR 42, upon receipt of the message of requesting a location registration, extracts subscriber information by using the user identification ID included in the message, and transmits it to the mobile exchange station 41 (step 104). The mobile exchange station 41 uses the subscriber information to thereby register the terminal 1 to the VLR. In the VLR, the subscriber information is managed by a temporal user identification ID, which is temporal information for identifying the user of the terminal 1.

The mobile exchange station 41, upon receipt of the subscriber information, transmits to the HLR 42 a reply message of receiving the subscriber information (step 105). The HLR 42, upon receipt of the reply message of receiving the subscriber information, transmits to the mobile exchange station 41 a replay message of the location registration (step 106).

Next, the mobile exchange station 41 transmits to the terminal 1 the reply message of the location registration and the temporal user identification ID (step 107). The terminal 1, upon receipt of the temporal user identification ID, transmits to the mobile exchange station 41 a replay message of receiving the temporal user identification ID (step 108).

The aforementioned is the general operation of the location registration as an existing mobile telephone system.

When the location registration is completed, the terminal 1 then transmits to the mobile exchange station 41 a message of requesting an issuance of a WLAN shared key, for requesting an issuance of a shared key in the wireless LAN system (step 109). The mobile exchange station 41, upon receipt of the message of requesting an issuance of a WLAN shared key, transmits the message to the shared key management server 4 (step 110). The message of requesting an issuance of a WLAN shared key includes, the temporal user identification ID of the terminal 1 and a base station ID of a radio base station 5 to which the location of the terminal 1 is registered.

The shared key management server 4, upon receipt of the message of requesting an issuance of a WLAN shared key, executes shared key generation processing P1 and transmits to the mobile exchange station 41 a message of transmitting the WLAN shared key including the generated shared key (step 111). In turn, the mobile exchange station 41 transmits to the shared key management server 4 a reply message of receiving the WLAN shared key (step 112), and transmits to the terminal 1 the message of transmitting the WLAN shared key (step 113). In turn, the terminal 1 transmits to the mobile exchange station 41 the reply message of receiving the WLAN shared key (step 114).

With the aforementioned processing from the step 109 to the step 114, the shared key is issued to the terminal 1.

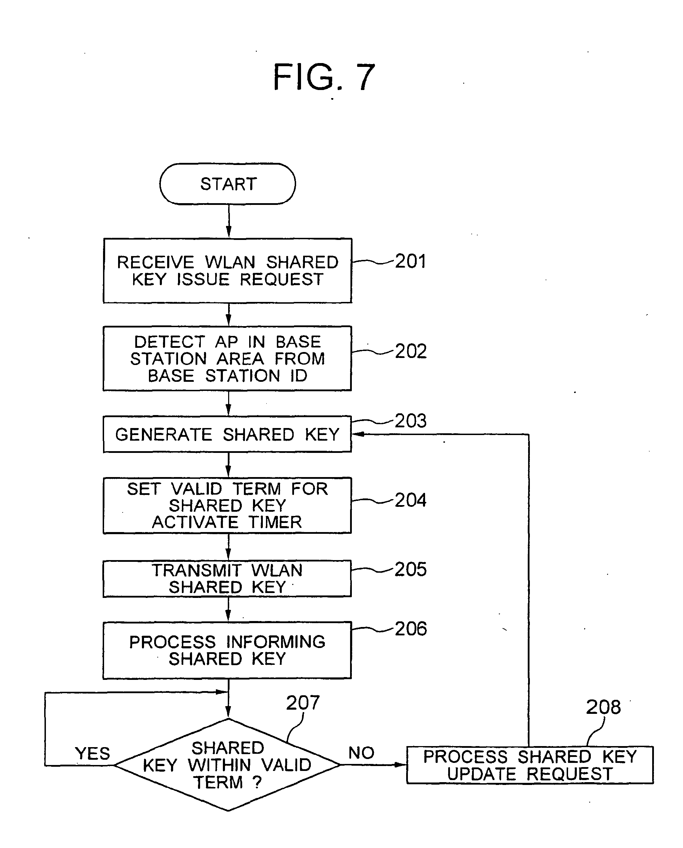

Fig. 7 is a flowchart showing the detail of the shared key generation processing. Referring to Fig. 7, the shared key management server 4 receives the message of requesting the issuance of the WLAN shared key (step 201) transmitted from the mobile exchange station 41 in the step 110 shown in Fig. 6. Then, the shared key management server 4 detects, with an base station ID included in the message, an access point device 2 exists in the communication area of the radio base station 5 (step 202). Since both of the radio base station 5 and the access point device 2 are arranged in a fixed manner, the base station IDs and the access point devices 2 exist within the communication area are correspondingly recorded in the database of the shared key management server 4. Using the database, the shared key management server 4 can immediately detect the access point device 2. The communication area of one radio base station 5 may include a plurality of access point devices 2.

The shared key management server 4 then generates a shared key corresponding to each access point device 2 according to the prescribed rule (step 203). It should be noted here that the reason why a shared key is generated corresponding to an access point device 2 is that it is less subject to decipher than having a shared key common to multiple access points. However, a shared key may be common to multiple access points.

The shared key management server 4 then activates a timer for measuring the valid term of the shared key (step 204), and transmits to the mobile exchange station 41 a message of transmitting the WLAN shared key (step 205) shown as the step 111 in Fig. 6. Since the shared key is informed from the mobile exchange station 41 to the terminal 1, issuance of the shared key on the terminal 1 side is completed with this step.

Next, the shared key management server 4 performs a shared key informing processing with the shared key management server 3 (step 206). The shared key informing processing is a processing for informing each access point device 2, in the communication area of the radio base station 5, of the shared key, the detail of which will be described later. With a shared key updating processing, the shared key is informed to the access point device 2, so that the terminal 1 is capable of connecting with the wire LAN 6 via the access point device 2.

The shared key management server 4 also monitors expiration of the timer activated in the step 204 (step 207). When the timer is expired, the shared key management server 4 performs a processing for requesting a shared key update (step 208), and then returns to the processing of the step 203. The processing for requesting a shared key update is a processing for requesting an periodical update of the shared key, the detail of which will be described later. The shared key management server 4, when returned to the processing of the step 203, generates a shared key with the same procedure as that described above, and informs the terminal 1 and each access point device 2 of it.

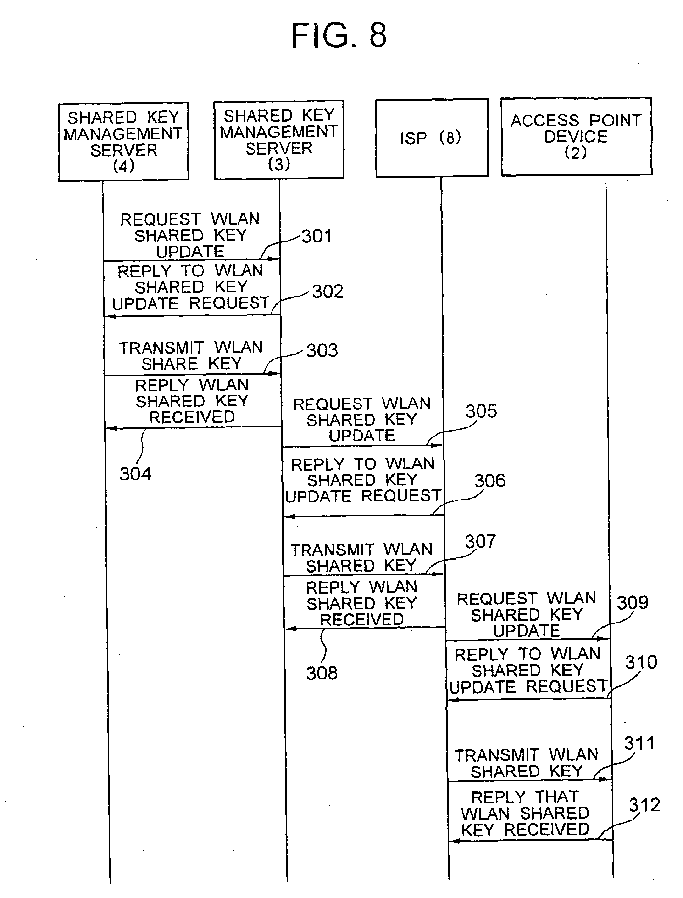

Fig. 8 is a sequence diagram showing the shared key informing processing as described above. The shared key is informed from the shared key management server 4 to the access point device 2 via the shared key management server 3 and the ISP device 8.

Referring to Fig. 8, the shared key management server 4 transmits to the shared key management server 3 a message of requesting a WLAN shared key update for requesting an update of the shared key (step 301). The shared key management server 3, upon receipt of the message, transmits back a reply message of requesting a WLAN shared key update (step 302). Then, the shared key management server 4 transmits to the shared key management server 3 a message of transmitting the WLAN shared key (step 303). The message of transmitting the WLAN shared key is a message for informing a shared key corresponding to each of the access point devices 2 in the communication area (service area) of the radio base station 5 to which the location of the terminal 1 is registered. The message of transmitting the WLAN shared key includes, a temporal user identification ID given to the user of the terminal 1, an ESSID of each access point device 2 in the service area, and a shared key corresponding to each access point device 2. The shared key management server 3, upon receipt of the message of transmitting the WLAN shared key, transmits back a replay message of receiving the WLAN shared key (step 304).

With the processing from the step 301 to the step 304 as described above, the shared key corresponding to the access point device 2 in the service area of the terminal 1 is transmitted from the shared key management server 4 to the shared key management server 3.

Next, the shared key is informed from the shared key management server 3 to the ISP device 8 (steps 305 to 308) with the same procedure as that of the steps 301 to 304.

Further, the shared key is informed from the ISP device 8 to each access point device 2 with the same procedure (steps 309 to 312).

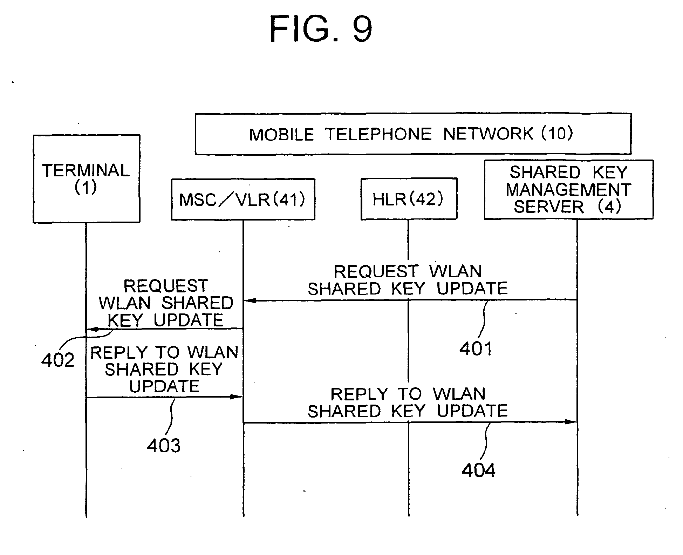

Fig. 9 is a sequence diagram showing the aforementioned processing of requesting a shared key update. The processing of requesting a shared key update is a processing for requesting a periodical update of the shared key. If the valid term of the shared key is determined as expired in the step 207 of Fig. 7, the shared key management server 4 moves to the processing of requesting a shared key update of the step 208.

Referring to Fig. 9, the shared key management server 4 transmits to the mobile exchange station 41 a message of requesting a WLAN shared key update for requesting an update of the shared key, the valid term of which is expired (step 401). The mobile exchange station 41, upon receipt of the message, transmits the message to the terminal 1 (step 402).

The terminal 1 transmits to the mobile exchange station 41 a reply message of the WLAN shared key update, indicating an acceptance of the update of the shared key (step 403). The message is then transmitted from the mobile exchange station 41 to the shared key management server 4 (step 404).

With the processing from the step 401 to the step 404, it is conformed that the shared key update is recognized between the terminal 1 and the shared key management server 4. Then, the shared key management server 4 starts generating the shared key as shown in step 203 of Fig. 7.

According to the present embodiment, as described above, when the location of the terminal 1 is registered to any radio base station 5 as a mobile telephone terminal, each access point device 2 of the wireless LAN in the communication area of the radio base station 5 and the terminal 1 automatically hold a shared key which can only be known to each other, and data on the radio channel of the wireless LAN is encrypted with the shared key. Therefore, even though the user does not enter the shared key, the wireless LAN in which data is encrypted can be easily used, and the cryptographic technique can always be managed in a correct manner.

Further, since the shared key held by the terminal 1 and each access point device 2 is updated at the time of location registration or periodically, the possibility of the shared key being deciphered and the data being eavesdropped or tampered is low, so that a system exhibiting an excellent fastness property (tamper-proof property) can be configured.

Although the present embodiment shows an example that the shared key management server 3 is provided independent of the ISP device 8, the present invention is not limited to this configuration. The ISP device 8 may have a function of the shared key management server 3.

Further, although an example that the temporal user identification ID is informed from the shared key management server 4 to the shared key management server 3 is shown in the present embodiment, the present invention is not limited to this configuration and the temporal user identification ID may not be transmitted.

Further, in the present embodiment, the terminal 1 is set to request a shared key for the wireless LAN system to the shared key management server 4 at the time of location registration of the mobile telephone system side. However, the present invention is not limited to this configuration. The terminal 1 may request a shared key at any time besides registering the location. For example, a shared key may be requested by manipulating the input device 25. Further, by providing a timer for counting a certain period, a shared key may be requested with a certain interval of time.

Further, although an example that a shared key is used for encrypting data communications of the wireless LAN, is shown as a radio communication system of the present embodiment, the shared key may be one for use in another security protection. For example, a shared key may be used for a user authentication of the wireless LAN.

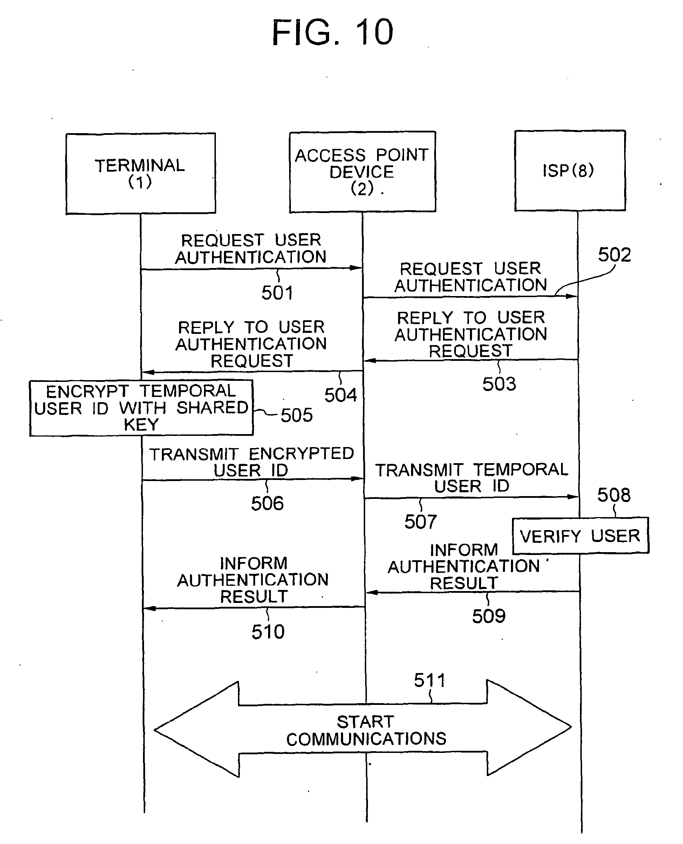

Fig. 10 is a sequence diagram showing the operation of the radio communication system at' the time of starting communications of the wireless LAN in a case of the shared key being used for a user authentication for the wireless LAN. Referring to Fig. 10, when starting communications through the wireless LAN, the terminal 1 first transmits to the access point device 2 a message of requesting a user authentication for requesting an authentication (step 501). The access point device 2 transmits it to the ISP device 8 (step 502).

The ISP device 8 transmits to the access point device 2 a reply message of requesting the user authentication replying to the authentication request (step 503). The access point device 2 transmits it to the terminal 1 (step 504).

The terminal 1 encrypts a temporal user ID using the shared key (step 505), and transmits it to the access point device 2 (step 506). The access point device 2 transmits it to the ISP device 8 (step 507).

The ISP device 8 decrypts the encryption of the temporal user identification ID by using the shared key, verifies it with the information stored beforehand (step 508), and transmits to the access point device 2 the verification result as a message of informing an authentication result (step 509). The access point device 2 transmits it to the terminal 1 (step 510). If the authentication result is one authorizing connection of the user, the terminal 1 can start communication through the wireless LAN (step 511).

Accordingly, since an authentication, using the shared key automatically generated and updated, is performed between the terminal 1 and the ISP device 8, without a specific recognition of the user, it is possible to prevent an unauthorized access to the wireless LAN system in an easy and reliable manner.

It is also possible to prevent a case that a third party acts as a user so as to perform an unauthorized access so that the user is improperly charged enormous amount of money. Therefore, charging to the use of the system can be preformed in a proper manner.

Further, although an example that a different shared key is generated for each access point device 2 is shown in the present embodiment, the present invention is not limited to this configuration. All access point devices 2 in a service area may have the same shared key. According to this configuration, processing for generating a shared key is simplified, and the volume of data transmitted from the shared key management servers 3, 4 to the terminal 1 and the access point devices 2 can be reduced.

### (Effects)

According to the present invention, the terminal requests, through the second communication network, the shared key management server to issue a shared key, and the shared key management server generates the shared key and informs both the terminal and the authentication unit. Therefore, the authentication unit and the terminal can automatically obtain a shared key which is only known to each other and use it for protecting the security of the radio channel, so that the security protection of the radio channel of the first communication network can be achieved in an easy and reliable manner, without a user of the terminal entering the shared key.

As an embodiment, the shared terminal requests, through the mobile telephone network, the shared key management server to issue a shared key, and the shared key management server generates the shared key and informs both the shared terminal and the access point device of the wireless LAN. Therefore, the wireless LAN and the shared terminal can automatically obtain a shared key which is only known to each other and use it for protecting the security of the radio channel, so that the security protection of the wireless LAN can be achieved in an easy and reliable manner, without a user of the shared terminal entering the shared key.

Since each access point device around a terminal is given a shared key, the wireless LAN can always keep such a state that the terminal is capable of connecting with an access point device around it.

Further, since the terminal performs radio communications using a different shared key for each access point device, the possibility of the shared key being deciphered is further reduced.

Moreover, a shared key held by the terminal and the first communication network is automatically updated periodically or at the time of location registration, which makes it difficult to decipher the shared key through a continuous monitoring of data. Accordingly, it is possible to built a system which has less possibility of data being eavesdropped or tampered and is excellent in the fastness property (tamper-proof property).

## Claims

1. A radio communication system using a shared key (81) for security protection of the data communication, comprising:
a first communication network through which data communications are performed;
a second communication network formed independent of the first communication network;
a terminal (1) connecting with the first communication network and the second communication network;
an authentication unit (2) provided to the first communication network; **characterised by**
a shared key management server (4) connecting with the first communication network and the second communication network; the shared key management server (4) comprising
means for receiving an issue request (33), which receives, from the terminal (1) through the second communication network, an issue request (109,110) of the shared key for use in the first communication network;
means for generating a shared key (34), which generates a shared key (81) for the terminal (1) according to the issue request (109,110) of the shared key from the terminal (1), the issue request (109,110) being received at the means for receiving the issue request (33); and
means for informing a shared key (35), which informs the terminal (1) via the second communication network and the authentication unit (2) via the first communication network of the shared key (81) generated at the means for generating the shared key (34); and in that
the authentication unit (2) has a function of authenticating true/false of the terminal (1) by using an authentication request (501,502,506,507), output from the terminal (1) based on the shared key (81), as a trigger, and informing the terminal (1) of an authentication result (509,510), and
the terminal (1) outputs to the authentication unit (2) the information from the shared key management server (4) as a trigger, and performs data communications through the first communication network based on the shared key (81) by using the authentication result (509,510) from the authentication unit (2) as a trigger.

2. The radio communication system, as claimed in claim 1, wherein
the first communication network is formed of a wireless LAN connecting with the terminal (1) over a radio channel,
the authentication unit (2) includes at least one access point device and connects with the wireless LAN over a wire LAN (6, 7), and
the second communication network is a mobile telephone network which covers at least one location registering area.

3. The radio communication system, as claimed in claim 2, wherein the shared key management server (4) informs each access point device (2), existing in an area to which a terminal location is registered on the second communication network, of the shared key (81).

4. The radio communication system, as claimed in claim 3, wherein the shared key management server (4) informs each access point device (2) of a different shared key (81), and informs the terminal (1) of every shared key.

5. The radio communication system, as claimed in claim 1, wherein the terminal (1) outputs the issue request of the shared key to the shared key management server (4) at intervals of a prescribed time.

6. The radio communication system, as claimed in claim 2, wherein the terminal outputs the issue request (109, 110) of the shared key to the shared key management server (4) every time the terminal (1) requests a location registration to the second communication network.

7. The radio communication system, as claimed in claim 1, wherein the shared key management server (4) generates a shared key (81) for the terminal (1) at intervals of a prescribed time, and informs the terminal (1) and the first communication network of the shared key (81).

8. The radio communication system, as claimed in claim 1, wherein the shared key (81) is used for encrypting data (84) to be transmitted/received by the terminal (1) and the first communication network.

9. The radio communication system, as claimed in claim 1, wherein the shared key (81) is used by the authentication unit (2) to authenticate the terminal (1).

10. A shared key management server for use in a radio communication system including, a first communication network for data communications performed by a terminal (1), and a second communication network which is formed independent of the first communication network and is provided for generating a shared key (81) for use in the data communications, the shared key management server (4) comprising:
means for receiving an issue request (33), which receives, from the terminal (1) through the second communication network, an issue request (109,110) of the shared key for use in the first communication network;
means for generating a shared key (34), which generates a shared key (81) for the terminal (1) according to the issue request (109,110) of the shared key from the terminal (1), the issue request (109,110) being received at the means for receiving the issue request (33); and
means for informing a shared key (35), which informs the terminal (1) via the second communication network and the authentication unit (2) via the first communication network of the shared key (81) generated at the means for generating the shared key (34).

11. The shared key management server, as claimed in claim 10, wherein
the first communication network is formed of a wireless LAN which connects with the terminal (1) over a radio channel, and is provided with an authentication unit (2);
the authentication unit (2) has a function of authenticating true/false of the terminal by using an authentication request (501,502,506,507) output from the terminal (1) based on the shared key (81) as a trigger, and informing the terminal (1) of the authentication result (509,510);
the authentication unit (2) includes at least one access point device and connects with the wireless LAN over a wire LAN; and
the second communication network is a mobile telephone network which covers at least one location registering area.

12. The shared key management server, as claimed in claim 11, wherein the means for informing a shared key (35) informs each access point device (2), existing in an area to which a terminal location is registered on the second communication network, of the shared key (81).

13. The shared key management server, as claimed in claim 12, wherein
the means for generating a shared key (34) generates a different shared key (81) for each access point device (2),
the means for informing a shared key (35) informs each corresponding access point device (2) of the shared key (81) generated for each access point device (2), and informs the terminal (2) of every shared key (81).

14. The shared key management server, as claimed in claim 10, wherein the means for generating a shared key (34) generates a shared key (81) for the terminal (1) at intervals of a prescribed time without any request from the terminal.

15. A terminal for use in a radio communication system including, a first communication network for data communications performed by the terminal (1), and a second communication network which is formed independent of the first communication network and is provided for generating a shared key (81) for use in the data communications, the terminal (1), which connects with the first communication network and the second communication network over a radio channel, comprising:
first communication controlling means (29) for controlling radio communications performed through the first communication network;
second communication controlling means (21) for controlling communications performed through the second communication network; and
main controlling means (23) for requesting, via the second communication controlling means (21), a shared key management server (4) which manages a shared key to issue the shared key (81), and informs the first communication controlling means (29) of the shared key (81) generated by and input from the server (4), for use between the first communication controlling means (29) and the first communication network.

16. The terminal, as claimed in claim 15, wherein
the first communication network is formed of a wireless LAN which connects with the terminal (1) over a radio channel, and is provided with an authentication unit (2);
the authentication unit (2) has a function of authenticating true/false of the terminal (1) by using an authentication request (501,502,506,507), output from the terminal (1) based on the shared key (81), as a trigger, and informing the terminal (1) of an authentication result (509, 510);
the authentication unit (2) includes at least one access point device and connects with the wireless LAN over a wire LAN (6,7); and
the second communication network is a mobile telephone network which covers at least one location registering area.

17. The terminal, as claimed in claim 15, wherein the main controlling means (23) requests the server (4) to issue the shared key (81) at intervals of a prescribed time.

18. The terminal, as claimed in claim 16, wherein the main controlling means (23) requests the server (4) to issue a shared key (81) every time the main controlling means (23) performs a location registration to the second communication network.

19. The terminal, as claimed in claim 15, wherein the first communication controlling means (29) uses the shared key (81) for encrypting data (84) to be transmitted/received between the first communication network.

20. The terminal, as claimed in claim 15, wherein the first communication controlling means (29) uses the shared key (81) for an authentication by the first communication network

## Patentansprüche

1. Funkkommunikationssystem, das einen Shared-Key (81) für den Sicherheitsschutz der Datenkommunikation verwendet, umfassend:
ein erstes Kommunikationsnetzwerk, über das Datenkommunikationen durchgeführt werden;
ein zweites Kommunikationsnetzwerk, das unabhängig von dem ersten Kommunikationsnetzwerk gebildet ist;
ein Endgerät (1), das mit dem ersten Kommunikationsnetzwerk und dem zweiten Kommunikationsnetzwerk verbunden ist;
eine Authentifizierungseinheit (2), die in dem ersten Kommunikationsnetzwerk vorgesehen ist; **gekennzeichnet durch**
einen Shared-Key-Management-Server (4), der mit dem ersten Kommunikationsnetzwerk und dem zweiten Kommunikationsnetzwerk verbunden ist; wobei der Shared-Key-Management-Server (4) umfaßt
Mittel für den Empfang einer Erteilungsanfrage (33), das von dem Endgerät (1) über das zweite Kommunikationsnetzwerk eine Erteilungsanfrage (109, 110) für einen Shared-Key zur Verwendung in dem ersten Kommunikationsnetzwerk empfängt;
Mittel zur Erzeugung eines Shared-Keys (34), das gemäß der Shared-Key-Erteilungsanfrage (109, 110) von dem Endgerät (1) einen Shared-Key (81) für das Endgerät (1) erzeugt, wobei die Erteilungsanfrage (109, 110) am Mittel zum Empfang der Erteilungsanfrage (33) empfangen wird; und
Mittel zur Mitteilung eines Shared-Keys (35), das dem Endgerät (1) über das zweite Kommunikationsnetzwerk und der Authentifizierungseinheit (2) über das erste Kommunikationsnetzwerk den Shared-Key (81) mitteilt, der von dem Mittel zur Erzeugung des Shared-Keys (34) erzeugt wurde; sowie **dadurch**, daß
die Authentifizierungseinheit (2) eine Funktion zur wahr/falsch-Authentifizierung des Endgeräts (1) aufweist, bei der eine Authentifizierungsanfrage (501, 502, 506, 507) als Auslöser verwendet wird, die von dem Endgerät (1) basierend auf dem Shared-Key (81) ausgegeben wurde, und bei der des Authentifizierungsergebnis (509, 510) dem Endgerät (1) mitgeteilt wird, und
das Endgerät (1) die Mitteilung von dem Shared-Key-Management-Server (4) an die Authentifizierungseinheit (2) als einen Auslöser ausgibt, und Datenkommunikationen über das erste Kommunikationsnetzwerk basierend auf dem Shared-Key (81) durchführt, indem das Authentifizierungsergebnis (509, 510) von der Authentifizierungseinheit (2) als Auslöser verwendet wird.

2. Funkkommunikationssystem nach Anspruch 1, bei dem
das erste Kommunikationsnetzwerk aus einem WLAN gebildet wird, das mit dem Endgerät (1) über einen Funkkanal verbunden ist,
die Authentifizierungseinheit (2) wenigstens ein Access-Point-Gerät umfaßt und mit dem WLAN über ein Kabel-LAN (6, 7) verbunden ist, und
das zweite Kommunikationsnetzwerk ein Mobiltelefonnetzwerk ist, das wenigstens einen Ortsregistrierungsbereich abdeckt.

3. Funkkommunikationssystem nach Anspruch 2, bei dem der Shared-Key-Management-Server (4) den Shared-Key (81) jedem Access-Point-Gerät (2) mitteilt, das sich in dem Bereich befindet, an dem der Ort des Endgeräts in dem zweiten Kommunikationsnetzwerk registriert ist.

4. Funkkommunikationssystem nach Anspruch 3, bei dem der Shared-Key-Management-Server (4) jedem Access-Point-Gerät (2) einen unterschiedlichen Shared-Key (81) mitteilt und dem Endgerät (1) jeden Shared-Key mitteilt.

5. Funkkommunikationssystem nach Anspruch 1, bei dem das Endgerät (1) eine Shared-Key-Erteilungsanfrage an den Shared-Key-Management-Server (4) in vorbestimmten Zeitintervallen ausgibt.

6. Funkkommunikationssystem nach Anspruch 2, bei dem das Endgerät die Shared-Key-Erteilungsanfrage (109, 110) an den Shared-Key-Management-Server (4) jedesmal dann ausgibt, wenn das Endgerät (1) eine Ortsregistrierung an dem zweiten Kommunikatinsnetz beantragt.

7. Funkkommunikationssystem nach Anspruch 1, bei dem der Shared-Key-Management-Server (4) einen Shared-Key (81) für das Endgerät (1) in vorbestimmten Zeitintervallen erzeugt und den Shared-Key (81) dem Endgerät (1) und dem ersten Kommunikationsnetzwerk mitteilt.

8. Funkkommunikationssystem nach Anspruch 1, bei dem der Shared-Key (81) zur Verschlüsselung von Daten (84) verwendet wird, die durch das Endgerät (1) und das erste Kommunikationsnetzwerk zu senden/empfangen sind.

9. Funkkommunikationssystem nach Anspruch 1, bei dem der Shared-Key (81) von der Authentifizierungseinheit (2) zur Authentifizierung des Endgeräts (1) verwendet wird.

10. Shared-Key-Management-Server zur Verwendung in einem Funkkommunikationssystem umfassend ein erstes Kommunikationsnetzwerk für Datenkommunikationen, die von einem Endgerät (1) durchgeführt werden, und ein zweites Kommunikationsnetzwerk, das unabhängig von dem ersten Kommunikationsnetzwerk gebildet ist, und der vorgesehen ist, um einen Shared-Key (81) für die Verwendung in den Datenkommunikationen zu erzeugen, wobei der Shared-Key-Management-Server (4) umfaßt:
Mittel zum Empfangen einer Erteilungsanfrage (33), das von dem Endgerät (1) über das zweite Kommunikationsnetzwerk eine Erteilungsanfrage (109, 110) für einen Shared-Key zur Verwendung in dem ersten Kommunikationsnetzwerk empfängt;
Mittel zur Erzeugung eines Shared-Keys (34), das gemäß der Shared-Key-Erteilungsanfrage (109, 110) von dem Endgerät (1) einen Shared-Key (81) für das Endgerät (1) erzeugt, wobei die Erteilungsanfrage (109, 110) an dem Mittel zum Empfangen der Erteilungsanfrage (33) empfangen wird; und
Mittel zur Mitteilung eines Shared-Keys (35), das den von dem Mittel zur Erzeugung des Shared-Key (34) erzeugten Shared-Key (81) dem Endgerät (1) über das zweite Kommunikationsnetzwerk und der Authentifizierungseinheit (2) über das erste Kommunikationsnetzwerk mitteilt.

11. Shared-Key-Management-Server nach Anspruch 10, bei dem
das erste Kommunikationsnetzwerk aus einem WLAN gebildet ist, das mit dem Endgerät (1) über einen Funkkanal verbunden ist und mit einer Authentifizierungseinheit (2) versehen ist;
die Authentifizierungseinheit (2) eine Funktion zur wahr/falsch-Authentifizierung des Endgeräts aufweist, bei der eine Authentifizierungsanfrage als Auslöser (501, 502, 506, 507) verwendet wird, die von dem Endgerät (1) basierend auf dem Shared-Key (81) ausgegeben wird, und bei der das Authentifizierungsergebnis (509, 510) dem Endgerät (1) mitgeteilt wird;
die Authentifizierungseinheit (2) wenigstens ein Access-Point-Gerät umfaßt und mit dem WLAN über ein Kabel-LAN verbunden ist; und
das zweite Kommunikationsnetzwerk ein Mobiltelefonnetzwerk ist, das wenigstens einen Ortsregistrierungsbereich abdeckt.

12. Shared-Key-Management-Server nach Anspruch 11, bei dem das Mittel zur Mitteilung eines Shared-Keys (35) den Shared-Key (81) jedem Access-Point-Gerät (2) mitteilt, das sich in dem Bereich befindet, an dem der Ort des Endgeräts in dem zweiten Kommunikationsnetzwerk registriert ist.

13. Shared-Key-Management-Server nach Anspruch 12, bei dem
das Mittel zur Erzeugung eines Shared-Keys (34) für jedes Access-Point-Gerät (2) einen unterschiedlichen Shared-Key (81) erzeugt,
das Mittel zur Mitteilung eines Shared-Keys (35) den für ein jeweiliges Access-Point-Gerät (2) erzeugten Shared-Key (81) dem entsprechenden Access-Point-Gerät (2) mitteilt und dem Endgerät (2) jeden Shared-Key (81) mitteilt.

14. Shared-Key-Management-Server nach Anspruch 10, bei dem das Mittel zur Erzeugung eines Shared-Keys (34) einen Shared-Key (81) für das Endgerät (1) in vorbestimmten Zeitintervallen erzeugt, ohne daß eine Anfrage des Endgeräts vorliegt.

15. Endgerät zur Verwendung in einem Funkkommunikationssystem umfassend ein erstes Kommunikationsnetzwerk für Datenkommunikationen, die von dem Endgerät (1) durchgeführt werden, und ein zweites Kommunikationsnetzwerk, das von dem ersten Kommunikationsnetzwerk unabhängig gebildet ist und zur Erzeugung eines Shared-Keys (81) zur Verwendung in den Datenkommunikationen vorgesehen ist, wobei das Endgerät (1), das mit dem ersten Kommunikationsnetzwerk und mit dem zweiten Kommunikationsnetzwerk über einen Funkkanal verbunden ist, umfaßt:
ein erstes Kommunikationssteuerungsmittel (29) zur Steuerung von Funkkommunikationen, die über das erste Kommunikationsnetzwerk durchgeführt werden;
ein zweites Kommunikationssteuerungsmittel (21) zur Steuerung von Kommunikationen, die über das zweite Kommunikationsnetzwerk durchgeführt werden; und
ein Hauptsteuerungsmittel (23), um über das zweite Kommunikationssteuerungsmittel (21) bei einem Shared-Key-Management-Server (4), der einen Shared-Key managt, die Erteilung des Shared-Keys (81) zu beantragen, und um den von dem Server (4) erzeugten und eingegebenen Shared-Key (81) dem ersten Kommunikationssteuerungsmittel (29) mitzuteilen, für die Verwendung zwischen dem ersten Kommunikationssteuerungsmittel (29) und dem ersten Kommunikationsnetzwerk.

16. Endgerät nach Anspruch 15, bei dem das erste Kommunikationsnetzwerk aus einem WLAN gebildet ist, das mit dem Endgerät (1) über einen Funkkanal verbunden ist, und das mit einer Authentifizierungseinheit (2) versehen ist;
die Authentifizierungseinheit (2) eine Funktion zur wahr/falsch-Authentifizierung des Endgeräts (1) aufweist, bei der eine Authentifizierungsanfrage (501, 502, 506, 507) als Auslöser verwendet wird, die von dem Endgerät (1) basierend auf dem Shared-Key (81) ausgegeben wird, und bei der das Authentifizierungsergebnisses (509, 510) dem Endgerät (1) mitgeteilt wird;
die Authentifizierungseinheit (2) wenigstens ein Access-Point-Gerät umfaßt und mit dem WLAN über ein Kabel-LAN (6, 7) verbunden ist; und
das zweite Kommunikationsnetzwerk ein Mobiltelefonnetzwerk ist, das wenigstens einen Ortsregistrierungsbereich abdeckt.

17. Endgerät nach Anspruch 15, bei dem das Hauptsteuerungsmittel (23) bei dem Server (4) die Erteilung des Shared-Keys (81) in vorbestimmten Zeitintervallen beantragt.

18. Endgerät nach Anspruch 16, bei dem das Hauptsteuerungsmittel (23) bei dem Server (4) die Erteilung eines Shared-Keys (81) jedesmal dann beantragt, wenn das Hauptsteuerungsmittel (23) eine Ortsregistrierung an dem zweiten Kommunikationsnetzwerk durchführt.

19. Endgerät nach Anspruch 15, bei dem das erste Kommunikationssteuerungsmittel (29) den Shared-Key (81) zur Verschlüsselung von Daten (84) verwendet, die zwischen dem ersten Kommunikationsnetzwerk zu übertragen/empfangen sind.

20. Endgerät nach Anspruch 15, bei dem das erste Kommunikationssteuerungsmittel (29) den Shared-Key (81) zur Authentifizierung durch das erste Kommunikationsnetzwerk verwendet.

## Revendications

1. Système de radiocommunication utilisant une clé partagée (81) pour la protection de sécurité de la communication de données, comprenant :
un premier réseau de communication par le biais duquel sont réalisées les communications de données ;
un second réseau de communication formé indépendant du premier réseau de communication ;
un terminal (1) en connexion avec le premier réseau de communication et le second réseau de communication ;
une unité d'authentification (2) fournie au premier réseau de communication ; **caractérisée par**
un serveur de gestion de clé partagée (4) en connexion avec le premier réseau de communication et le second réseau de communication ; le serveur de gestion de clé partagée (4) comprenant
un moyen pour recevoir une requête d'émission (33) qui reçoit, du terminal (1) par le biais du second réseau de communication, une requête d'émission (109, 110) de la clé partagée pour utilisation dans le premier réseau de communication ;
un moyen pour générer une clé partagée (34), qui génère une clé partagée (81) pour le terminal (1) selon la requête d'émission (109, 110) de la clé partagée du terminal (1), la requête d'émission (109, 110) étant reçue au moyen pour recevoir la requête d'émission (33) ; et
un moyen pour informer une clé partagée (35), qui informe le terminal (1) via le second réseau de communication et l'unité d'authentification (2) via le premier réseau de communication de la clé partagée (81) générée au moyen pour générer la clé partagée (34) ; et en ce que
l'unité d'authentification (2) comprend une fonction d'authentification vrai/faux du terminal (1) par utilisation d'une requête d'authentification (501, 502, 506, 507), émise depuis le terminal (1) sur la base de la clé partagée (81), en tant que déclencheur, et informant le terminal (1) d'un résultat d'authentification (509, 510), et
le terminal (1) émet à l'unité d'authentification (2) les informations du serveur de gestion de clé partagée (4), en tant que déclencheur, et réalise les communications de données par le biais du premier réseau de communication sur la base de la clé partagée (81) en utilisant le résultat d'authentification (509, 510) de l'unité d'authentification (2) en tant que déclencheur.

2. Système de radiocommunication, selon la revendication 1, dans lequel
le premier réseau de communication est formé d'un réseau LAN sans fil en connexion avec le terminal (1) sur une voie radio,
l'unité d'authentification (2) comprend au moins un dispositif de point d'accès et se connecte avec le réseau LAN sans fil sur un réseau LAN filaire (6, 7), et
le second réseau de communication est un réseau de téléphonie mobile qui couvre au moins une zone d'enregistrement de localisation.

3. Système de radiocommunication selon la revendication 2, dans lequel le serveur de gestion de clé partagée (4) informe chaque dispositif de point d'accès (2), existant dans une zone à laquelle une localisation de terminal est enregistrée sur le second réseau de communication, de la clé partagée (81).

4. Système de radiocommunication selon la revendication 3, dans lequel le serveur de gestion de clé partagée (4) informe chaque dispositif de point d'accès (2) d'une clé partagée différente (81), et informe le terminal (1) de chaque clé partagée.

5. Système de radiocommunication selon la revendication 1, dans lequel le terminal (1) émet la requête d'émission de la clé partagée au serveur de gestion de clé partagée (4) à des intervalles d'un temps prescrit.

6. Système de radiocommunication selon la revendication 2, dans lequel le terminal (1) émet la requête d'émission (109, 110) de la clé partagée au serveur de gestion de clé partagée (4) à chaque fois que le terminal (1) demande un enregistrement de localisation au second réseau de communication.

7. Système de radiocommunication selon la revendication 1, dans lequel le serveur de gestion de clé partagée (4) génère une clé partagée (81) pour le terminal (1) à des intervalles d'un temps prescrit, et informe le terminal (1) et le premier réseau de communication de la clé partagée (81).

8. Système de radiocommunication selon la revendication 1, dans lequel la clé partagée (81) est utilisée pour crypter les données (84) devant être transmises/reçues par le terminal (1) et le premier réseau de communication.

9. Système de radiocommunication selon la revendication 1, dans lequel la clé partagée (81) est utilisée par l'unité d'authentification (2) pour authentifier le terminal (1).

10. Serveur de gestion de clé partagée pour utilisation dans un système de radiocommunication comprenant, un premier réseau de communication pour les communications de données réalisées par un terminal (1), et un second réseau de communication qui est formé indépendamment du premier réseau de communication et conçu pour générer une clé partagée (81) pour utilisation dans les communications de données, le serveur de gestion de clé partagée (4) comprenant :
un moyen pour recevoir une requête d'émission (33), qui reçoit, du terminal (1) par le biais du second réseau de communication, une requête d'émission (109, 110) de la clé partagée pour utilisation dans le premier réseau de communication ;
un moyen pour générer une clé partagée (34), qui génère une clé partagée (81) pour le terminal (1) selon la requête d'émission (109, 110) de la clé partagée du terminal (1), la requête d'émission (109, 110) étant reçue au moyen de réception de la requête d'émission (33) ; et
un moyen pour informer une clé partagée (35), qui informe le terminal (1) via le second réseau de communication et l'unité d'authentification (2) via le premier réseau de communication de la clé partagée (81) générée au moyen pour générer la clé partagée (34).

11. Serveur de gestion de clé partagée, selon la revendication 10, dans lequel
le premier réseau de communication est formé d'un réseau LAN sans fil qui se connecte avec le terminal (1) sur une voie radio, et utilisé avec une unité d'authentification (2) ;
l'unité d'authentification (2) est dotée d'une fonction d'authentification vrai/faux du terminal en utilisant une requête d'authentification (501, 502, 506, 507) émise depuis le terminal (1) sur la base de la clé partagée (81) en tant que déclencheur, et informant le terminal (1) du résultat d'authentification (509, 510) ;
l'unité d'authentification (2) comprend au moins un dispositif de point d'accès et se connecte avec le réseau LAN sans fil sur un réseau LAN filaire et
le second réseau de communication est un réseau de téléphonie mobile qui couvre au moins une zone d'enregistrement de localisation.

12. Serveur de gestion de clé partagée, selon la revendication 11, dans lequel le moyen pour informer une clé partagée (35) informe chaque dispositif de point d'accès (2), existant dans une zone à laquelle une localisation de terminal est enregistrée sur le second réseau de communication, de la clé partagée (81)

13. Serveur de gestion de clé partagée, selon la revendication 12, dans lequel
le moyen pour générer une clé partagée (34) génère une clé partagée différente (81) pour chaque dispositif de point d'accès (2),
le moyen pour informer une clé partagée (35) informe chaque dispositif de point d'accès correspondant (2) de la clé partagée (81) générée pour chaque dispositif de point d'accès (2), et informe le terminal (2) de chaque clé partagée (81).

14. Serveur de gestion de clé partagée, selon la revendication 10, dans lequel le moyen pour générer une clé partagée (34) génère une clé partagée (81) pour le terminal (1) à des intervalles d'un temps prescrit sans aucune requête du terminal.

15. Terminal pour utilisation dans un système de radiocommunication comprenant, un premier réseau de communication pour communications de données réalisées par le terminal (1), et un second réseau de communication qui est formé indépendamment du premier réseau de communication et conçu pour générer une clé partagée (81) pour utilisation dans les communications de données, le terminal (1) en connexion avec le premier réseau de communication et le second réseau de communication sur une voie radio comprenant :
un premier moyen de contrôle de communication (29) pour contrôler les communications radio réalisées par le biais du premier réseau de communication ;
un second moyen de contrôle de communication (21) pour contrôler les communications réalisées par le biais du second réseau de communication ; et
un moyen principal de contrôle (23) pour demander via le second moyen de contrôle de communication (21), un serveur de gestion de clé partagée (4) qui gère un clé partagée d'émettre la clé partagée (81), et informe le premier moyen de contrôle de communication (29) de la clé partagée (81) généré par et émise depuis le serveur (4), pour utilisation entre le premier moyen de contrôle de communication (29) et le premier réseau de communication.

16. Terminal, selon la revendication 15, dans lequel le premier réseau de communication est formé d'un réseau LAN sans fil qui se connecte avec le terminal (1) sur une voie radio, et est utilisé avec une unité d'authentification (2) ;
l'unité d'authentification (2) comprend une fonction d'authentification vrai/faux du terminal (1) par utilisation d'une requête d'authentification (501, 502, 506, 507), émise depuis le terminal (1) sur la base de la clé partagée (81), en tant que déclencheur, et informant le terminal (1) d'un résultat d'authentification (509, 510) ;
l'unité d'authentification (2) comprend au moins un dispositif de point d'accès et se connecte avec le réseau LAN sans fil sur un réseau LAN filaire (6, 7) ; et
le second réseau de communication est un réseau de téléphonie mobile qui couvre au moins une zone d'enregistrement de localisation.

17. Terminal, selon la revendication 15, dans lequel le moyen de contrôle principal (23) demande au serveur (4) d'émettre une clé partagée (81) à des intervalles d'un temps prescrit.

18. Terminal, selon la revendication 16, dans lequel le moyen de contrôle principal (23) demande au serveur (4) d'émettre une clé partagée (81) chaque fois que le moyen de contrôle principal (23) réalise un enregistrement de localisation au second réseau de communication.

19. Terminal, selon la revendication 15, dans lequel le premier moyen de contrôle de communication (29) utilise la clé partagée (81) pour crypter les données (84) devant être transmises/reçues entre le premier réseau de communication.

20. Terminal, selon la revendication 15, dans lequel le premier moyen de contrôle de communication (29) utilise la clé partagée (81) pour une authentification par le premier réseau de communication.
